(19) **Europäisches Patentamt / European Patent Office / Office européen des brevets**

(11) **EP 1 982 601 A1**

(12) # EUROPEAN PATENT APPLICATION

(43) Date of publication:
**22.10.2008 Bulletin 2008/43**

(51) Int Cl.:
**A23G 9/34** *(2006.01)*

(21) Application number: **07106351.5**

(22) Date of filing: **17.04.2007**

(84) Designated Contracting States:
**AT BE BG CH CY CZ DE DK EE ES FI FR GB GR HU IE IS IT LI LT LU LV MC MT NL PL PT RO SE SI SK TR**
Designated Extension States:
**AL BA HR MK RS**

(71) Applicant: **Nestec S.A.**
**1800 Vevey (CH)**

(72) Inventors:
• **Saikali, Joumana**
**60000, Beauvais (FR)**
• **Schlegel, Myriam**
**60000,Fouquenies (FR)**

(74) Representative: **Elleby, Gudrun**
**Nestec S.A.**
**IP Department**
**Avenue Nestlé, 55**
**1800 Vevey (CH)**

(54) **Reduced sugar ice confection**

(57) The first invention concerns an ice confection composition having a reduced sugar content of not exceeding 15 wt.-% based on the total composition which comprises
a mixture of sugars containing fructose and at least 2.5 wt.-% of sucrose on the total composition wherein the amount of fructose is up to 80 % of the total sugars,
less than 8 wt.-% of non-fat milk solids and
less than 7 wt.-% of medium to high glycemic index oligosaccharides and polysaccharides.

The second invention relates to an ice confection composition having a reduced sugar content of not exceeding 15 wt.-% based on the total composition which comprises a mixture of sugars containing fructose and at least 2.5 wt.-% of sucrose on the total composition wherein the amount of fructose is up to 70 % of the added sugars, more than 8 wt.-% of non-fat milk solids and less than 7 wt.-% of medium to high glycemic index oligosaccharides and polysaccharides.

## Description

The present invention relates to ice confection compositions having a reduced sugar content.

Field of the invention

Ice confections are products which are highly appreciated by consumers, both children and adults. Sweetness is a major driver for consumer preference. Another important feature is the texture of the ice confection. The consumers expect them to be easily scoopable or directly edible from the freezer.

There has been an increasing concern for health and wellness and an increasing need for reduced calories, sugars and fats also in ice confections. A joint FAO/WHO Expert Consultation recommended that excessive intakes of sugars which compromise micronutrient density should be avoided. The bulk of carbohydrate-containing foods consumed be those rich in non-starch polysaccharides and with a low glycemic index. (Carbohydrates in human nutrition. 1998 (FAO Food and Nutrition Paper - 66) Similarly, the French Food & safety agency AFSSA emitted recommendations to decrease added sugar intake and favour consumption of unrefined carbohydrate, especially in children diets. (Carbohydrate & Health: current situation, evaluation & recommendations, AFSSA October 2004).

Hitherto, many ice confections have been put on the market that claim low or no sugar by containing polyols and/or intense sweeteners. However, polyols may have laxative effects when consumed at high levels and use of intense sweeteners is not recommended for products aimed at young children. In addition, consumers associate ice confections with indulgence and seek for themselves and their children nutritionally more balanced products with a natural image.

Background of the invention and related prior art

It is common knowledge that sugars play essential roles in the sensory properties of ice confections. Sugars have at least a dual functioning system in ice confections. They provide sweetness and flavor enhancement and depress the freezing point making the ice confection conveniently scoopable. In addition, sugars are a cheap source of solids.

Reducing total sugars in ice confections implies contemplating the loss of these properties and preventing the ice confection from getting exceedingly hard and untasty. This is generally performed by using polyols and/or intense sweeteners.

All sugars do not have the same sweetening power and freezing point depression factor. Usually, monosaccharides such as glucose, galactose or fructose depress the freezing point more than disaccharides like maltose, lactose, sucrose.

Fructose is unanimously considered as sweeter than sucrose. Its sweetening power in water is estimated to 120-150 compared to a 10% sucrose reference of a sweetening power of 100. A value of 173 is described in "Ice Cream", sixth edition (R. T. Marshall, H. Douglas Goff and R. W. Hartel). In addition, the fructose sweetness is different in temporal profile by having a quicker onset and a shorter lasting than that of sucrose which is the sugar considered as giving the most pleasant sweetness.

US 4,497,841 describes ice cream dessert mixes containing, as a sweetening agent, a fructose-based sweetener containing at least 75% by weight fructose. In a preferred embodiment the ice confection would be free of sucrose and contains pure fructose because of the said high sweetness of this sugar. In addition, the ice creams comprise fructose in a very high amount which may have an adverse impact on the consumer's health.

EP 0 244 149 B1 teaches that some specific ratios of sucrose and fructose have exhibited synergistic effects in sweetness. However, there is no specific application in ice cream production described.

EP 1 673 980 Al provides a low-calorie frozen confection comprising fructose in combination with other saccharides as a sweetening agent. The confection contains considerable amounts of digestible complex saccharides to compensate for the relative low levels of sugars, that may not offer a nutritional benefit compared to the sugars replaced.

Therefore, it is an object of the invention to provide a technology for reduced sugar ice confections with a pleasant taste and texture without using polyols or intense sweeteners.

It is a further object of the invention to provide reduced ice confections having a sufficient sweetness without relying on enormous amounts of fructose contained therein.

It is a further object of the present invention to provide an ice confection which has a pleasant sweet taste and a texture and that bears a natural image well accepted by the consumers and suitable for young children.

Summary of the invention

These objects have been solved with an ice confection composition having a reduced sugar content of not exceeding 15 wt.-% based on the total composition which comprises

a mixture of sugars containing fructose and at least 2.5 wt.-% of sucrose on the total composition wherein the amount of fructose is up to 80 % of the total sugars,
less than 8 wt.-% of non-fat milk solids and
less than 7 wt.-% of medium to high glycemic index oligosaccharides and polysaccharides.

This ice confection composition is, for example, suitable for preparing a water ice, sorbet or an ice cream.

These objects have also been solved with an ice confection composition having a reduced sugar content of not exceeding 15 wt.-% based on the total composition which comprises

a mixture of sugars containing fructose and at least 2.5 wt.-% of sucrose on the total composition wherein the amount of fructose is up to 70 % of the added sugars, more than 8 wt.-% of non-fat milk solids and

less than 7 wt.-% of medium to high glycemic index oligosaccharides and polysaccharides.

This ice confection may be used, for example, for preparing an ice cream.

The subclaims define preferred embodiments of the subject matter claimed.

It has been found that the ice confection composition of the present invention posses many valuable and attractive properties to the consumers. It has been found, for example, that a reduced sugar ice confection that bears a natural image can be provided without polyols or intense sweeteners. The reduced sugar ice confection as well as the products containing it have a pleasant texture and sweetness. The products have an improved sweetness and taste even though a substantial amount of the conventional sugars is eliminated.

It has been found, contrary to prior knowledge, that fructose does not express a higher sweetening power than the equivalent weight of sucrose when used in combination with too low levels of sucrose in the ice confection products. In the prior art, the high relative sweetness of fructose is described and minimum levels of this sugar to produce sweet ice confections are required. Surprisingly, a minimum level of sucrose in combination with fructose is needed to achieve a pleasant sweetness in reduced sugar ice confections.

In the present invention, ranges of sugar combinations have been determined to express sugar synergies and allow developing a tasty ice confection. An additional benefit to the good sweetness intensity due to the claimed sugar combination, is a pleasant temporal profile of sweetness.

In the following, the terms used herein are explained.

As used herein, the term "sugar" refers to digestible mono- and disaccharides having a caloric value of >3.5 kcal/g. Non-limiting examples are dextrose, sucrose, lactose, maltose and fructose.

The term "added sugars" refers to all sugars added to the ice confection by the manufacturer plus sugars naturally present in honey, syrups and fruit juices. It excludes sugars naturally present in the milk ingredients (such as lactose) or coming from the fruit.

The term "oligosaccharides" means carbohydrates having a degree of polymerization between 3 to 9.

The term "polysaccharides" means carbohydrates having a degree of polymerization of more than 10.

The term "medium to high glycemic index (GI) oligosaccharides and/or polysaccharides" refers to oligosaccharides and/or polysaccharides having a GI of >55 compared to glucose. They have a caloric value of >3.5 kcal/g.

The term "low glycemic index (GI) oligosaccharides and/or polysaccharides" refers to oligosaccharides and/or polysaccharides having a GI of <55 compared to glucose. They have a caloric value of >3.5 kcal/g.

"Non-digestible carbohydrate" in the sense of the present invention have a caloric value of <3.5 kcal/g.

The term "ice confection" encompasses sweet foodstuffs intended to be consumed in frozen state. Typical examples are ice creams, water ices and sorbets.

The term "non-fat milk solids" as used herein, refers to non-fat dry milk, dry buttermilk, whey, caseinate, low lactose skim milk powder and mixtures thereof.

The "relative sweetness" of a given sugar A is represented by the formula

$$C_S/C_A$$

wherein $C_S$ means the concentration of sucrose providing a perceived sweetness intensity I and $C_A$ is the concentration of the sugar A to get the same intensity I.

Detailed description of the invention

The ice confection composition of the present invention has a reduced sugar content of not exceeding 15% relying exclusively on natural sugars. The ice confection composition is characterized by comprising a mixture of sugars containing fructose and at least 2.5 wt.-% of sucrose on the total composition.

An ice confection of the invention comprises less than 8 wt.-% of non-fat milk solids and less than 7 wt.-% of medium to high glycemic index oligosaccharides and polysaccharides when the amount of fructose is up to 80 % of the total sugars. In a preferred embodiment of the invention, the amount of fructose is less than 75% of the total sugars.

An ice confection of the invention comprises more than 8 wt.-% of non-fat milk solids and less than 7 wt.-% of medium to high glycemic index oligosaccharides and polysaccharides when the amount of fructose is up to 70 % of the added sugars. In a preferred embodiment of the invention, the amount of fructose is less than 60% of the total sugars.

Surprisingly, fructose shows a higher sweetening power than sucrose only when used in combination with at least 2.5 wt.-% sucrose on the total composition.

Preferably, the amount of fructose in the ice confection composition of the present invention is in a range of 3.5 to 10.0 wt.-% based on the total composition. More preferred, the amount of fructose is in the range of 4.0 to 8 wt.-% based on the total composition. It has been shown that best sweetening results can be achieved when the amount of fructose is at least 3.5 wt.-% based on the total composition.

Optimum results with respect to the sweetening power can be obtained, for example, when at least 3.5 wt.-% fructose and at least 2.5wt.-% sucrose are contained in the ice confection composition of the present invention. It has been surprisingly shown that a higher sweetness than the equivalent amount of total sugars coming from fructose or sucrose used alone can be achieved.

In addition, using the claimed combination of fructose, sucrose in the said amounts and potentially other sugars in ice confections provides for a scoopable and good texture product well accepted by the consumer.

The ice confection composition of the present invention can also comprise other ingredients which are usually added to ice confection products.

The ice confection composition may also contain mono- and/or disaccharides other than fructose and sucrose.

The ice confection composition of the present invention is characterized by a low fat content. Preferably, the fat content is no more than 7 wt.-% based on the total composition. Usually, the fat ingredients are butter fat, cream, coconut oil, palm oil, palm kernel oil, sunflower oil, safflower oil rapeseed oil, soybean oil and mixtures thereof.

If desired, the ice confection composition of the present invention can further comprise digestible low glycemic index oligosaccharides or polysaccharides. The amount of the digestible low glycemic index oligosaccharides or polysaccharides is no more than 20 wt.-% based on the total composition.

Non-limiting examples of the low glycemic index oligo-saccharides or polysaccharides are slowly digestible starches and derivatives.

If appropriate, the ice confection composition of the present invention further comprises non-digestible carbohydrate. The non-digestible carbohydrate can be selected from inulin, fructo-oligo-saccharides, galacto-oligo-saccharides, polydextrose, dextrins, resistant starch, fibers from vegetal origin and mixtures thereof. In a preferred embodiment, the non-digestible bulking agents comprise fibres extracted from vegetal origin.

The amount of the non-digestible bulking agent is preferably in a range of 1 to 15 wt.-% based on the total composition.

The ice confection composition of the present invention may further comprise ingredients and/or additives which are common in ice cream technology. Said ingredients and/or additives are, for example, proteins, emulsifiers, stabilizers, acidifying agents, flavourings, colourings and mixtures thereof

The proteins to be used in the ice cream composition of the present invention are, for example, milk proteins or proteins from milk origin, egg proteins or proteins from vegetable origin such as soya, rice, pea, wheat and oat.

Suitable emulsifiers to be used are monoglycerides, diglycerides, polysorbate, or polyol esters of fatty acids such as propylene glycol monoester of fatty acids and mixtures thereof.

Stabilizer which can be used in the present invention are locust bean gum, guar gum, alginates, cellulose, xanthan gum, carboxymethyl cellulose, microcrystalline cellulose, alginates, carrageenans, pectins and mixtures therof.

The amounts thereof are within the skill of the skilled person.

If the ice confection composition of the present invention is intended to exhibit a particular fruity character, it may also comprises fruit puree, fruit pieces or juices of any suitable fruit.

The ice confection composition of the present invention also contains essential amounts of water. Preferably, the water content is in the range of 45 to 95 wt.-%. Depending on the water content and the ingredients employed in the ice confection composition, the ice confection composition of the present invention can be composed as an ice cream, sorbet or water ice which can be kept frozen at temperatures between -10° to -35° C and consumed at said temperatures.

In a preferred embodiment of the invention, the ice confection has an overrun in the range of 0 to 200 %, when formulated as a water ice or sorbet. An ice cream product usually has an overrun in the range of 50 to 250%.

The energy values are quite low, preferably in a range of 40 to 160 kcal/100 g.

The ice confection of the present invention preferably contains less than 1% of polyols and/or no intense sweetener (also called high intensity sweeteners). More preferred, the ice confection of the present invention does not contain any polyol nor intense sweetener.

The ice confections according to the invention are manufactured following standard processes. Usually, the ingredients are mixed in an appropriate mixer and subsequently pasteurized and homogenized or vice versa. The homogenized/pasteurized mixture is then optionally aged. The mix is than aerated until an appropriate overrun and frozen to a temperature of around -1 to -20°C. The ice confection produced may then be hardened to a temperature between -20° to -40°C for several hours. The ice confections are then stored at an appropriate freezing temperature of around 20 to -35°C.

The present invention is now further illustrated by means of the examples.

Examples

Example 1

The following ice confection has been prepared using the following ingredients:

Formula 1

| water | 58.90 |

(continued)

| | |
|---|---|
| Skim milk powder | 9.00 |
| Fresh cream 35% fat | 15.00 |
| Sugar | 3.00 |
| Spray-dried glucose syrup | 4.50 |
| Cremodan 809 Creamline | 0.60 |
| Fructose | 5.00 |
| Polydextrose Litesse Ultra | 4.00 |
| Flavour | 0.05 |
| | |
| TS (%) | 31.46 |
| Total sugars (%) | 14.45 |
| Total digestible carbohydrate (%) | 17.71 |
| Non digestible carbohydrate (%) | 3.74 |
| Protein (%) | 3.43 |
| Fat (%) | 5.79 |
| MSNF (%) | 8.48 |
| Energy (kcal/100g) | 125 |

The ingredients are dispersed under shear in a mixing tank at 65°C and hydrated at 60°C during 20 minutes. Then they were pasteurized at 86°C during 30s and then cooled down to 72°C. They were homogenized at 150 bars and 50 bars and quickly cooled down to 4°C.
The mix was then aged for duration of minimum 4h at 4°C. The mix was then aerated till a 100% overrun and frozen to a temperature of around -5.5°C. The ice cream produced was then hardened at -40°C for 3h. Samples were then stored at -30°C.

Example 2

A water ice has been prepared using the following ingredients:

**Formula 2:**

| | |
|---|---|
| Water | 86. 5 |
| Sugar | 7 |
| Fructose | 5 |
| Citric acid | 0.2 |
| Guar | 0.2 |
| Flavour | 0.1 |
| | |

(continued)

| | |
|---|---|
| TS (%) | 13.4 |
| Total sugars (%) | 13 |
| Total digestible CHO (%) | 13 |
| Non digestible carbohydrate (%) | 0.2 |
| Protein (%) | 0 |
| Fat (%) | 0 |
| MSNF (%) | 0 |
| Energy (kcal/100g) | 52 |

Mixing and pasteurization were similar to that of formula 1 in example 1. Ageing is optional.
Freezing was made without aeration to a temperature of -2°C, the mix was then poured into moulds. The moulds were placed in a brine tank cooled at -40°C for duration of 2h and then stored at -30°C.

**Claims**

1. An ice confection composition having a reduced sugar content of not exceeding 15 wt.-% based on the total composition which comprises

    a. a mixture of sugars containing fructose and at least 2.5 wt.-% of sucrose on the total composition wherein the amount of fructose is up to 80 % of the total sugars,
    b. less than 8 wt.-% of non-fat milk solids and
    c. less than 7 wt.-% of medium to high glycemic index oligosaccharides and/or polysaccharides.

2. An ice confection composition having a reduced sugar content of not exceeding 15 wt.-% based on the total composition which comprises

    d. a mixture of sugars containing fructose and at least 2.5 wt.-% of sucrose on the total composition wherein the amount of fructose is up to 70 % of the added sugars,
    e. more than 8 wt.-% of non-fat milk solids and
    f. less than 7 wt.-% of medium to high glycemic index oligosaccharides and/or polysaccharides.

3. The composition according to claim 1 wherein the amount of fructose is less than 75 % of the total sugars.

4. The composition according to claim 2 wherein the amount of fructose is less than 60 % of the added sugars.

5. The composition according to any one of claims 1 to 4 wherein the amount of fructose is in a range of 3.5 to 10.0 wt.-% based on the total composition.

6. The composition according to claim 5 wherein the amount of fructose is in the range of 4.0 to 8 wt.-% based on the total composition.

7. The composition according to any one of claims 1 to 6 wherein the fat content is no more than 7 wt.-% based on the total composition.

8. The composition according to claim 7 wherein the fat ingredients are butterfat, cream, coconut oil, palm oil, palm kernel oil, sunflower oil, safflower oil, rapeseed oil, soybean oil and mixtures thereof.

9. The composition according to any one of claims 1 to 8 further comprising digestible low glycemic index oligosaccharides and/or polysaccharides.

10. The composition according to claim 9 wherein the low glycemic index oligosaccharides and polysaccharides are selected from slowly digestible starches and derivatives thereof.

11. The composition according to claim 9 and/or 10 wherein the amount of low glycemic index oligosaccharides and polysaccharides is no more than 15 wt.-% based on the composition.

12. The composition according to any one of claims 1 to 11 further comprising non-digestible carbohydrate.

13. The composition according to claim 12 wherein the non-digestible carbohydrate are selected from inulin, fructo-oligo-saccharides, galacto-oligo-saccharides, polydextrose, dextrins, resistant starch, fibers from vegetal origin and mixtures thereof.

14. The composition according to claim 12 and/or 13 wherein the non-digestible carbohydrate are present in an amount of 1 to 15 wt.-% based on the total composition.

15. The composition according to any one of claims 1 to 14 further comprising proteins, emulsifiers, stabilizers, acidifying agents, flavourings, colourings and mixtures thereof.

16. The composition according to any one of claims 1 to 17 further comprising fruit purees, fruit pieces or juices.

17. The composition according to any one of claims 1 to 16 wherein the water content is in the range of 45 to 95 wt.

18. The composition according to claim 1 and any one of claims 3, 5 to 17 having an overrun in the range of 0 to 200 %.

19. The composition according to claim 2 and any one of claims 4 to 17 having an overrun in the range of 50 to 250 %.

20. The composition according to any one of claims 1 to 19 which is frozen.

21. The composition according to any one of claims 1 to 20 which contains less than 1 wt.-% polyol based on the total composition.

22. The composition according to any one of claims 1 to 21 which contains no intense sweetener.

European Patent
Office

**EUROPEAN SEARCH REPORT**

Application Number

EP 07 10 6351

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2005/129810 A1 (LINDNER NIGEL M [GB] ET AL) 16 June 2005 (2005-06-16) * paragraph [0048] * ----- | 1,3,5-22 | INV. A23G9/34 |
| X | US 4 400 406 A (MORLEY ROBERT G [US] ET AL) 23 August 1983 (1983-08-23) * column 4, line 64 - column 5, line 4 * * column 6, line 43 - column 7, line 28; examples 3,5b * ----- | 1-22 | |
| X | DATABASE WPI Week 200527 Derwent Publications Ltd., London, GB; AN 2005-257300 XP002450098 & JP 2005 080548 A (DAIICHI KOGYO SEIYAKU CO LTD) 31 March 2005 (2005-03-31) * abstract * ----- | 1,3,5-22 | |
| A | US 4 737 368 A (BATTERMAN CYNTHIA K [US] ET AL) 12 April 1988 (1988-04-12) * column 4, lines 59,60; claim 1 * ----- | 1-22 | TECHNICAL FIELDS SEARCHED (IPC) |
| X | US 2003/031758 A1 (KOSS RONALD [US] ET AL) 13 February 2003 (2003-02-13) * paragraphs [0035], [0037] - [0039]; examples III,VI; table 2 * ----- | 2,4-22 | A23G |
| X | EP 1 723 852 A (UNILEVER PLC [GB]; UNILEVER NV [NL]) 22 November 2006 (2006-11-22) * paragraphs [0047], [0048]; table 1 * ----- | 2,4-22 | |
| E | EP 1 882 418 A (UNILEVER PLC [GB]; UNILEVER NV [NL]) 30 January 2008 (2008-01-30) * paragraph [0021] * ----- -/-- | 2,4-22 | |

The present search report has been drawn up for all claims

| Place of search | Date of completion of the search | Examiner |
|---|---|---|
| Munich | 27 February 2008 | Rinaldi, Francesco |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**EUROPEAN SEARCH REPORT**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | AT 385 180 B (WEGHOFER HANS GEORG DR [AT]) 25 February 1988 (1988-02-25) * page 5, line 36 - line 38; claim 1 * ----- | 2 | |
| | | | **TECHNICAL FIELDS SEARCHED** (IPC) |

The present search report has been drawn up for all claims

| Place of search | Date of completion of the search | Examiner |
|---|---|---|
| Munich | 27 February 2008 | Rinaldi, Francesco |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

European Patent
Office

Application Number

EP 07 10 6351

## CLAIMS INCURRING FEES

The present European patent application comprised at the time of filing more than ten claims.

☐ Only part of the claims have been paid within the prescribed time limit. The present European search report has been drawn up for the first ten claims and for those claims for which claims fees have been paid, namely claim(s):

☐ No claims fees have been paid within the prescribed time limit. The present European search report has been drawn up for the first ten claims.

## LACK OF UNITY OF INVENTION

The Search Division considers that the present European patent application does not comply with the requirements of unity of invention and relates to several inventions or groups of inventions, namely:

    see sheet B

☒ All further search fees have been paid within the fixed time limit. The present European search report has been drawn up for all claims.

☐ As all searchable claims could be searched without effort justifying an additional fee, the Search Division did not invite payment of any additional fee.

☐ Only part of the further search fees have been paid within the fixed time limit. The present European search report has been drawn up for those parts of the European patent application which relate to the inventions in respect of which search fees have been paid, namely claims:

☐ None of the further search fees have been paid within the fixed time limit. The present European search report has been drawn up for those parts of the European patent application which relate to the invention first mentioned in the claims, namely claims:

☐ The present supplementary European search report has been drawn up for those parts of the European patent application which relate to the invention first mentioned in the claims (Rule 164 (1) EPC).

**European Patent Office**

**LACK OF UNITY OF INVENTION SHEET B**

Application Number

EP 07 10 6351

The Search Division considers that the present European patent application does not comply with the requirements of unity of invention and relates to several inventions or groups of inventions, namely:

1. claims: 1,3,5-22 (part)

   Ice confection comprising less than 8% of non-fat milk solids, at least 2.5% of sucrose, wherein the amount of fructose is up to 80% of the total sugar

   ---

2. claims: 2,4,5-22 (part)

   Ice confection comprising more than 8% of non-fat milk solids, at least 2.5% of sucrose, wherein the amount of added fructose is up to 70% of the total sugar.

   ---

## ANNEX TO THE EUROPEAN SEARCH REPORT
## ON EUROPEAN PATENT APPLICATION NO.

EP 07 10 6351

This annex lists the patent family members relating to the patent documents cited in the above-mentioned European search report.
The members are as contained in the European Patent Office EDP file on
The European Patent Office is in no way liable for these particulars which are merely given for the purpose of information.

27-02-2008

| Patent document cited in search report | | Publication date | Patent family member(s) | | Publication date |
|---|---|---|---|---|---|
| US 2005129810 | A1 | 16-06-2005 | AU 2004201026 A1<br>CA 2459610 A1<br>EP 1541034 A1<br>WO 2005058056 A1 | | 30-06-2005<br>10-06-2005<br>15-06-2005<br>30-06-2005 |
| US 4400406 | A | 23-08-1983 | NONE | | |
| JP 2005080548 | A | 31-03-2005 | JP 3776097 B2 | | 17-05-2006 |
| US 4737368 | A | 12-04-1988 | NONE | | |
| US 2003031758 | A1 | 13-02-2003 | NONE | | |
| EP 1723852 | A | 22-11-2006 | NONE | | |
| EP 1882418 | A | 30-01-2008 | NONE | | |
| AT 385180 | B | 25-02-1988 | AT 162485 A | | 15-08-1987 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 4497841 A
- EP 0244149 B1
- EP 1673980 A

**Non-patent literature cited in the description**

- **R. T. MARSHALL ; H. DOUGLAS GOFF ; R. W. HARTEL.** Ice Cream